Europäisches Patentamt

**European Patent Office**

Office européen des brevets

(11) Publication number: **0 107 631**
**A2**

# EUROPEAN PATENT APPLICATION

(21) Application number: **83850256.5**

(22) Date of filing: **26.09.83**

(51) Int. Cl.³: **G 01 N 35/08, B 01 L 3/00**

(30) Priority: **28.09.82 DK 4296/82**

(43) Date of publication of application: **02.05.84**
**Bulletin 84/18**

(84) Designated Contracting States: **DE FR GB SE**

(71) Applicant: **BIFOK AB, Box 124, S-191 22 Sollentuna (SE)**
Applicant: **INFLOW ApS, Attemosevej 26, DK-2840 Holte (DK)**

(72) Inventor: **Ruzicka, Jaromir, Attemosevej 26, DK-2840 Holte (DK)**
Inventor: **Hansen, Elo Harald, Granasen 93, DK-2800 Lyngby (DK)**
Inventor: **Janata, Jiri, 2231 Logan Avenue, Salt Lake City Utah 84108 (US)**

(74) Representative: **Rosenquist, Holger et al, H Albihns Patentbyra AB Box 7664, S-103 94 Stockholm (SE)**

(54) **Integrated microconduits for continuous flow analysis.**

(57) A miniaturized system of conduits formed in integrated, monolithic structure includes a first plate (4) of rigid, nonporous material on one face of which is formed one or more channels (8), and a second plate (12) bonded to the one face of the first plate to cover the channel. Ducts (18) are formed in either the first or second plate to extend perpendicularly from the channel to the exterior of the plates to allow introduction of solution into and withdrawal of solution from the channel. Additional plates, with channels formed in the faces thereof, may be bonded to the first and second plates in a stacked relationship to provide multiple levels of channels, selectively connected by perpendicular ducts.

Integrated Microconduits for Continuous Flow Analysis

This invention relates to a unitary structure defining conduits for use in continuous flow analysis.

For analysis of the composition of liquid samples, there are a number of so-called continuous flow analysis systems presently used in laboratory practice. These include air-segmented continuous flow systems (L.T. Skeggs, Amer. J. Clin. Pathol., 28 (1957) 311), liquid chromatography systems (J.F.K. Huber, Instrumentation for High Performance Liquid Chromatography, Elsevier, 1978), and flow injection analysis systems (see, e.g. US Patent No. 4,224,033). The common characteristic of all these systems is that individual sample solutions are treated or processed sequentially as they move from an inlet through tubes or the like to a detector section which yields an analytical readout of some parameter of the solution. Examples of processing liquid samples in a continuous flow fashion include the following: sample volume metering, sample dilution, splitting of the sample into several parallel streams for different types of assay, reagent addition(s), mixing, heating and separation of sample components by ion exchange, gas diffusion, dialysis, etc. Various types of detectors for detecting optical, electrochemical, thermal, etc., properties have been used in the flow analysis systems to monitor the composition of the liquid stream and give the analytical result.

Typically continuous flow analysis systems are built in a modular fashion to include those individual components (e.g., injection port, mixing coil, merging T-piece, flow-through detector, etc.) needed to perform the particular analysis desired. These components are interconnected by suitable lengths of tubing which carry the sample solutions to and from the components.

Although this type of construction provides flexibility, since rearrangement and replacement of components may be readily accomplished, there are a number of drawbacks. For example, each connecting point is a potential source of leaks and so the components and tubing must be carefully assembled and periodically checked. Also, each connecting point is a potential source of disturbance of the flow path, possibly enlarging it to cause zone spreading, or constricting it to increase flow resistance. Finally, as dispersion in any flow system depends on its geometry, use of detachable connecting tubes might induce changes in the geometry of flow resulting in loss of reproducibility and repeatability of measurement.

It is an object of the invention to provide a new and improved system of conduits for use in continuous flow analysis.

It is also an object of the invention to provide such a system which is simple in construction and easy to assemble.

It is a further object of the invention to provide such a system which is substantially rigid in its geometry and leak-free.

It is another object of the invention to provide a compact, miniaturized system of conduits.

The above and other objects are realized in a specific illustrative embodiment of a conduit system comprising a first plate made of a substantially rigid, nonporous material. Channels are formed in one face of the plate by molding, stamping, etching or the like. A second plate of substantially nonporous material is bonded to the first plate to cover the channels. Ducts are formed in either the first or second plate to extend from the channels to the exterior of the plates to allow introduction of fluid into and withdrawal of fluid from the channels. The channels are thus rigidly formed in one plane.

Advantageously, additional plates, inscribed with channels, may be bonded in a stacked relationship to the first and second plates, and ducts formed in the plates to join the channels in the different layers. A miniaturized and compact system of conduits is thus provided.

In certain cases, instead of plates, we have used tubes, both cylindrical and slightly conical. By making the channels on the outside of a tube or a cylinder, we can also seal the grooves to closed channels by using a flexible, thin plate. It is thereby possible to simplify the connection to pumps, instruments etc. by making the tube system as a plug-in unit similar to an oldfashioned radio tube, which is plugged into a socket which is permanently connected to the various supply means and sensors. This design constitutes a substantial simplification and further development of the technology encompassed by our previous patents GB-PS 1 597 905, 2 007 574, 2 023 286, and US-PS 4 022 575 and 4 315 754.

We have used the microconduit system according to the invention with advantage for continuous flow analysis with indicators and reference electrodes for determining pH, pK, pCa and partial oxygen pressure.

By constructing the system so that at least a portion of the sample introduced is not diluted by the carrier flow, we can measure one or more parameters in the sample itself, and by using a carrier flow of a specific composition and specific pH, we can measure both pH in the sample and pH in one or more segments of the dispersed sample zones.

Defined volumes can be added by external valves and be introduced into the system by means of the hydrodynamic injection principle. The system can also be designed so that part of the introduced sample is undiluted by the carrier solution and one or several parameters and/or the sample itself can be analyzed. By using a carrier solution of defined composition and predetermined pH, determinations can be made both of the sample itself and of segments of the gradient of the dispersed sample solution.

A gas in a sample can be determined by introducing the sample into a carrier stream running on one side of a selective membrane and a recipient solution absorbing or reacting with the gas running on the other side of the membrane. The presence and amount of the gas can then be detected and recorded.

Foreign substances in a gas can also be determined by introducing the gas mixture into the carrier solution for reaction or absorption of the foreign substance, whereafter the rest of the gas is separated and the substance determined.

Other uses of the system are for extracorporal clinical monitoring of body fluids, for coulometric detection and for degassing of fluids.

The above and other objects, features and advantages of the invention will become apparent from a consideration of the following detailed description presented in connection with the accompanying drawings in which:-

Fig 1 shows a side, cross-sectional, exploded view of a system of conduits made in accordance with the principles of the present invention;

Fig 2 shows a side, cross-sectional, fragmented view of the system of Fig 1;

Fig 3 shows a side, cross-sectional, exploded view of a system of conduits, some of which are separated by a membrane;

Fig 4 is a schematic representation of a system of conduits used for metering and mixing of sample solutions;

Fig 5 is a schematic representation of a system of conduits used for metering, chemical separation and optical detection of sample solutions;

Fig 6 is a schematic representation of a system of conduits used for mixing and optical detection of sample solutions; and

Fig 7 is a schematic representation of a system of conduits used for metering and electrochemical detection of sample solution.

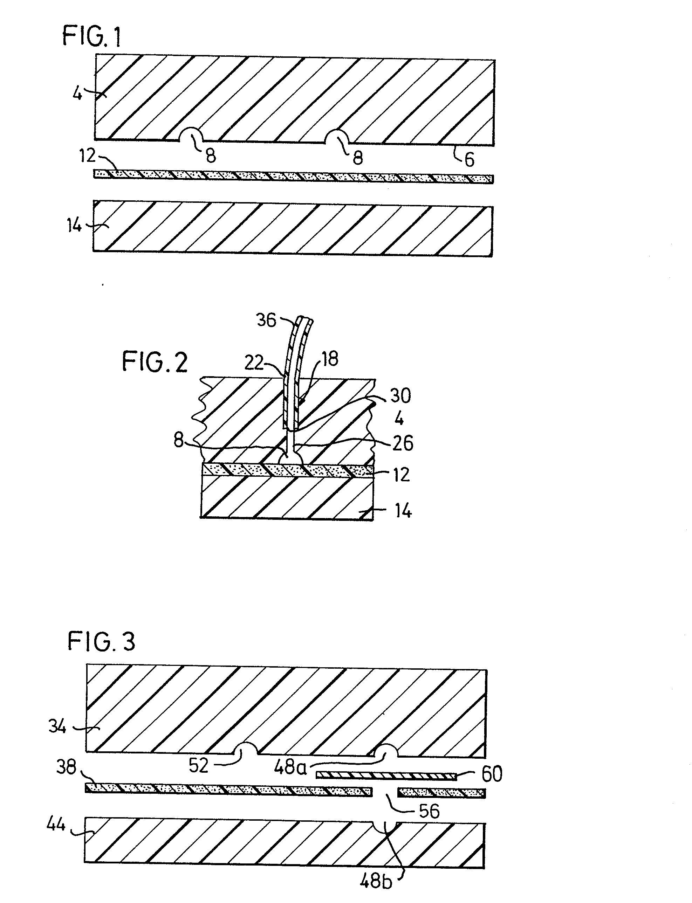

Referring to Fig 1, there is shown a side, cross-sectional, exploded view of a rigid monolithic, integrated structure for defining a system of conduits. The structure includes a baseplate 4 having at least one generally flat face 6 in which one or more channels 8 are formed. The channels 8 may be formed using any conventional technique such as molding, stamping, etching or the like. The baseplate is made of a substantially rigid, nonporous material such as polymethyl methacrylate, polyvinyl chloride, vinyl acetate, fluorocarbons, aluminum, glass or ceramics. As shown in Fig 1, the channels 8 are formed to generally have a semicircular cross section, although other shapes could also be utilized.

A thin, generally flat plate 12 is bonded to the face 6 of the plate 4 to cover the channels 8 and thus form conduits coincident therewith. It may be desirable to provide a third plate 14 to reinforce the plate 12, in which case the plate 14 would be bonded to the back of the plate 12. Plates 12 and 14 might illustratively be made of polymethyl methacrylate, polyvinyl chloride, vinyl acetate, fluorocarbons, aluminum, glass or ceramics. The plates 4, 12 and 14 are bonded together by thermosetting or thermoplastic polymeric resin, the choice of adhesive depending on the materials being bonded together.

Access to the conduits 8 for either the introduction of fluid thereinto or the withdrawal of fluid therefrom is provided via ducts, such as duct 18, formed in baseplate 4 to be generally perpendicular with the conduits. Advantageously, the ducts are formed with an enlarged section 22, extending from the top of the plate 4 to about the middle of the plate, and a reduced section 26 extending from the enlarged section to the conduit 8. A shoulder 30 is thus formed in the duct, as shown, to provide a landing and stop against which the end of a flexible tube 36 may rest when inserted (and glued) into the duct. The other end of the tube 36 is connected to a peristaltic pump or other source of liquid, or to a liquid sink.

The above described layered structure facilitates, among other things, the formation of sections of parallel channels 48a and 48b (Fig 3) for use in chemical separation such as, for example, dialysis. The structure of Fig 3 includes a base plate 34 in which are formed two channels 48a and 52. A second plate 38 with a slot 56 formed therein to be coincident with a section of channel 48a is bonded to the baseplate 34. A third plate 44 is provided with the channel 48b formed therein so that a section of the channel is parallel with a section of the channel 48a and the slot 56 when the plate 44 is bonded to the plate 38. Disposed between the baseplate 34 and the plate 38 to separate the sections of channels 48a and 48b which are parallel, is a permeable or semipermeable layer of material 60. The material 60 may be selected to allow passage of molecules of solute between channels 48a and 48b (dialysis), or of gaseous species between the channels (gas diffusion), etc.

With the conduit system of the present invention, a plurality of plates formed with conduits in a plurality of generally parallel planes can be provided. Selected conduits in the different planes may be interconnected by short perpendicular ducts formed in the plates. A three-dimensional labyrinth of microconduits, simple in construction and yet substantially leak-free, is thus possible.

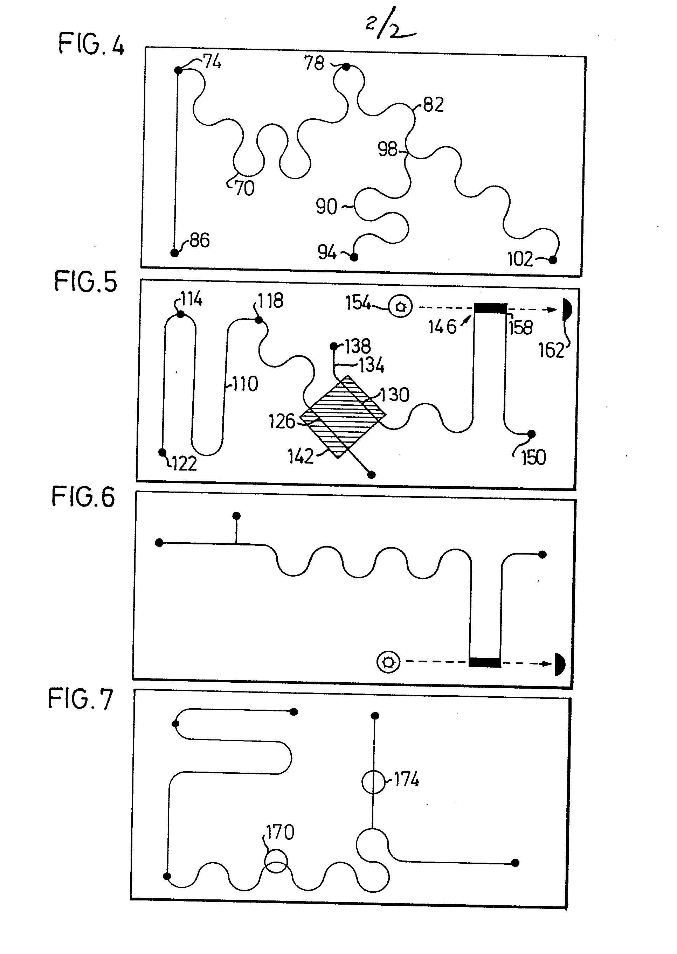

Figs 4 through 7 show, in schematic form, various functional conduit systems constructed in accordance with the present invention. Fig 4 shows a metering and mixing system in which a precise amount of solution may be mixed with another solution. The first solution is introduced to a conduit section 70 via inlet duct 74. Excess solution exists from outlet duct 78 so that a predetermined (metered) volume of solution is placed in the conduit section 70 between the inlet duct 74 and the outlet duct 78. After the solution is in place, ducts 74 and 78 are closed and the solution is pumped to conduit section 82 by a pump (not shown) connected to duct 86. Another solution may be introduced to a conduit section 90 via an inlet duct 94, and then mixed with the first solution at mixing point 98. The mixed solutions may then be withdrawn from the conduits by way of outlet duct 102 for analysis or other treatment.

Fig 5 depicts a system of conduits for use in metering, chemical separation and optical detection. A metered volume of solution (or gas) is placed in conduit section 110 between duct inlet 114 and duct outlet 118, and then pumped (by a pump connected to duct 122) to a section of conduit 126 which is arranged in parallel and close proximity with another conduit section 130 (the sections are shown to be side by side in Fig 5 but, in fact, would be arranged one above the other as shown in Fig 3). Another solution (or gas) is introduced into conduit 134 via duct inlet 138 to pass adjacent to the solution (or gas) in conduit section 126 to enable dialysis, gas diffusion or the like to take place through membrane 142. The solution (or gas) in section 130 is then passed through an optical detector assembly 146 and out an outlet duct 150. The optical detector assembly includes a light source 154, an optical flow cell 158, and an optical detector 162 for detecting changes in the optical properties of a solution (or gas) flowing through the optical flow cell 9.

Fig 6 schematically shows a system of conduits for use in mixing and optical detection such as for post column chromatography. Fig 7 depicts a system of conduits for metering and electrochemical detection by a detector 170 (element 174 is a reference electrode).

Although specific combinations of features and functions have been illustrated in Figs 5, 4-7, it will be understood that these features could be combined in still a variety of other ways in the conduit system of the present invention. This system is simple in design, easy to manufacture in miniaturized form, and reliable in operation.

CLAIMS

1. Integrated microconduit system for flow-through analysis of gases and liquids, consisting of a channel system of a shape-stable material, characterized in that the channel system is arranged between two surfaces as open grooves in one or both of the surfaces, and the sealing of the grooves is accomplished by placing the two surfaces together to form a unit with a channel system which can comprise a number of sections or flow channels for carrying out various functions.

2. Microconduit system according to Claim 1, characterized in that the surfaces are flat and disposed on plane parallel plates.

3. Microconduit system according to Claim 2, characterized in that the channels are connected to external means, containers, sensors, pumps etc. via channels through the plates at an angle to the common surface or lying in the surface and opening at the edges of the plates.

4. Microconduit system according to Claims 1 - 3, characterized in that transducers, sensors, reference electrodes, indicator electrodes and the like are arranged inside the channel system.

5. Microconduit system according to anyone of the preceding claims, characterized in that a plurality of units are placed in contact with and in communication with each other.

6. Microconduit system according to Claim 5, characterized in that the communication between the various units is effected through porous structures, semipermeable membranes or the like.

7. Microconduit system according to Claim 4, characterized in that the reference electrode is placed in the same flow channel as the indicator electrode and that the carrier flow contains an ionic species which ensures a defined potential on the reference electrode.

8. Microconduit system according to Claim 4, characterized in that the reference electrode and the indicator electrode are placed in separate flow channels and communicate with each other and with the reference electrode supplied with a solution containing an ionic species which ensures a defined potential on the reference electrode.

9. Microconduit system according to Claim 4, characterized in that the sensors are thermistors for measuring the temperatures in the flows.

10. Microconduit system according to Claim 4, characterized in that the transducers are LED diodes and the sensors are photosensors for photometric detection.

11. Microconduit system according to anyone of the preceding claims for introducing a defined sample volume, characterized by channels coupled in parallel to each other and separated from each other by membranes permeable to gases of dissolved molecules.

12. Method of manufacturing microconduit systems according to anyone of the preceding claims, characterized in that grooves are made by stamping, pressing, milling, etching or the like in a surface and a tight sealing of the grooves to channels or conduits is effected by placement together with another surface with a corresponding shape.

13. Method according to Claim 12, characterized in that the other surface is also provided with grooves.

14. Use of integrated microconduit system according to anyone of the preceding claims, for continuous flow analysis, the microconduit system being provided with indicator and reference electrodes, through which alternately an aqueous stream of carrier solution and sample solution is propelled.

15. Use of microconduit system according to anyone of the preceding claims, for continuous measuring of pH, where the indicator electrode is a miniaturized potentiometric PVC-based membrane pH-sensor.

16. Use of microconduit system according to anyone of the preceding claims, for continuous measuring of pK, where the indicator electrode is a miniaturized potentiometric PVC-based membrane potassium sensor.

17. Use of microconduit system according to anyone of the preceding claims, for continuous measuring of pCa, where the indicator electrode is a miniaturized potentiometric PVC-based membrane calcium sensor.

18. Use of microconduit system according to anyone of the preceding claims, for continuous measuring of the partial pressure of oxygen, where the indicator electrode is a miniaturized amperometric oxygen electrode.

19. Use of microconduit system according to anyone of the preceding claims, for introducing a defined volume of sample solution by means of an external valve.

20. Use of microconduit system according to anyone of the preceding claims, where part of said conduit system of defined volume is reserved for metering off a defined volume of sample solution and said sample solution is subsequently introduced by means of the hydrodynamic injection principle.

21. Use of microconduit system according to anyone of the preceding claims, for introducing a defined sample volume, where the microconduit system is so designed that at least part of the introduced sample zone is undiluted by the carrier stream solution, thereby allowing the measurement of one or several parameters of the sample itself.

22. Use of microconduit system according to anyone of the preceding claims, where the carrier stream is a solution of defined composition and fixed pH, thus allowing both the measurement of the pH of the sample itself and of one or several segments on the gradient of the dispersed sample zone, the buffering capacity of the sample by means of the recorded pH-values of said segments corresponding to defined mixing ratios of carrier solution and sample solution.

23. Use of microconduit system according to anyone of the preceding claims, in which said membrane selectively allows passage of carbon dioxide, ammonia or some other gas, where the sample is introduced into the carrier stream which passes on one side of the membrane, while a recipient stream passes on the other side of said membrane, said recipient being of such a composition that the gas passing the membrane causes a detectable chemical reaction in the recipient stream.

24. Use of a microconduit system according to anyone of the preceding claims, for simultaneous measurement of species, where the system is equipped with two or more indicator electrodes sharing a common reference electrode, where each of the indicator electrodes respectively are sensitive to one of the species to be measured.

25. Use of microconduit system according to anyone of the preceding claims, for extracorporal clinical monitoring of body fluids, such as blood.

26. Use of microconduit system according to anyone of the preceding claims, for coulometric detection.

27. Use of microconduit system according to anyone of the preceding claims, for determination of poisonous or other substances in air or other gases, whereby the gas mixture is inserted in a suitable carrier stream, for absorption or reaction of the substance, and the rest of the gas is separated and the substance is determined.

28. Use of microconduit system according to anyone of the preceding claims, for degassing of fluid streams.

FIG.1

FIG.2

FIG.3

FIG. 4

FIG.5

FIG.6

FIG.7